Europäisches Patentamt

European Patent Office

Office européen des brevets

(11) Publication number: **0 264 254 B1**

# EUROPEAN PATENT SPECIFICATION

(45) Date of publication of patent specification: **06.03.91**

(51) Int. Cl.⁵: **B65G 13/071, B65G 37/00, B23Q 7/14**

(21) Application number: **87309029.4**

(22) Date of filing: **13.10.87**

(54) **Conveyor systems.**

(30) Priority: **15.10.86 JP 244661/86**

(43) Date of publication of application:
**20.04.88 Bulletin 88/16**

(45) Publication of the grant of the patent:
**06.03.91 Bulletin 91/10**

(84) Designated Contracting States:
**DE FR GB IT NL**

(56) References cited:
**EP-A- 0 014 666        EP-A- 0 038 871**
**EP-A- 0 051 867        DE-U- 7 831 423**
**GB-A- 2 004 243        US-A- 1 900 149**
**US-A- 4 479 572**

(73) Proprietor: **SONY CORPORATION**
**7-35 Kitashinagawa 6-Chome Shinagawa-ku**
**Tokyo 141(JP)**

(72) Inventor: **Usui, Motosuke c/o Patent Division**
**Sony Corporation 6-7-35 Kitashinagawa**
**Shinagawa-ku Tokyo 141(JP)**

(74) Representative: **Thomas, Christopher Hugo et al**
**D Young & Co 10 Staple Inn**
**London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to conveyor systems. Such systems may, for example, be used in industrial production lines and may form so-called free-flow type roller conveyor systems for production lines requiring high precision and high accuracy in production, such as integrated circuit chip production lines.

One typical free-flow type conveyor system is known as a roller-chain type conveyor system and includes an endless chain which carries a plurality of idler rollers arranged at regular intervals. An object to be conveyed rests on the idler rollers and is carried according to driving of the chain. Since the object rests on the idler rollers, the movement of the object can be stopped by exerting a small resistance or movement restricting force. Therefore, in practical operation, the object can be held at respective production stations in the production line for manufacturing operations. However, in such a system, the chain and rollers are continuously driven even while the object is stopped at a station. This inevitably causes vertical vibration of the object at the stopped position, which may interfere with or make it difficult to perform the required production operation. When the operations carried out at the station requires a high degree of precision, such vertical vibration becomes a particular problem.

To solve such problems in roller-chain type conveyor systems, there has been proposed a roller drive type conveyor system which drives the object by the rotational torque of a plurality of driven roller stationarily installed along the conveying path and driven by means of a driving means in a feed direction. In such conveyor systems, since the conveying force is exerted on the object simply by the surface-to-surface friction between the object and the periphery of the driven roller, the object can easily be stopped at a production station. Each driven roller in this type of conveyor system is rotatably supported on a roller shaft extending from a stationary support frame. The roller is connected to a driving means, such as a driving motor, via an endless drive belt which transmits the driving torque. In this construction, high accuracy of the components of the conveyor system is required in order to eliminate vibration of the object, and such accuracy cannot be satisfactorily achieved.

European patent specification EP-A2-0 051 867 discloses a conveyor system having features similar to the preamble of Claim 1.

According to the present invention there is provided a conveyor system comprising:
a pair of frames extending longitudinally and in substantially parallel relationship to each other;
a plurality of roller assemblies mounted on said frame, each of said roller assemblies including a roller rotatably supported on said frame and aligned with rollers of other roller assemblies to define a conveying path through which an object to be conveyed is transferred;
a driving mechanism for rotatingly driving said rollers in said roller assemblies for exerting feed force on said object; and
friction means interposed between said driving mechanism and said rollers of said roller assemblies for allowing slip to occur between said driving mechanism and said rollers when the load on said rollers causes the resistance of said rollers to rotation to exceed a given magnitude;
said friction means being provided for each of said rollers so as to limit power transmission between said driving mechanism and each of said rollers and independently of the other said rollers, so that when one of said rollers is slipping relative to said driving mechanism, the other said rollers are driven to rotate by said driving mechanism; characterized by means, at a predetermined position in said conveyor path, for quickly stopping and quickly feeding out said object, said means including an auxiliary driving mechanism associated with said rollers located at positions corresponding to the position of said means and having a variable driving speed for varying the rotational speed of the associated said rollers.

The invention will now be described by way of example with reference to the accompanying drawings, throughout which like parts are referred to by like references, and in which:

Figure 1 is a plan view of an embodiment of roller conveyor system according to the present invention;

Figure 2 is a section along line II-II of Figure 1;

Figure 3 is an enlarged side elevation of a drive mechanism in the embodiment;

Figure 4 is a section along line IV-IV of Figure 3;

Figure 5 is an enlarged plan view of a section of the system of Figure 1, in which an auxiliary drive mechanism is installed for rapid stop and rapid feed;

Figure 6 is a further enlarged side elevation of the section of Figure 5;

Figure 7 is a section along line VII-VII of Figure 5;

Figure 8 is a section along line VIII-VIII of Figure 5;

Figure 9 is a section along line IX-IX of Figure 5;

Figure 10 is a side elevation of a lifting mechanism in the embodiment;

Figure 11 is a chart showing variation of the feed speed at a production station; and

Figure 12 is a chart showing another pattern of variation of the feed speed at the production station.

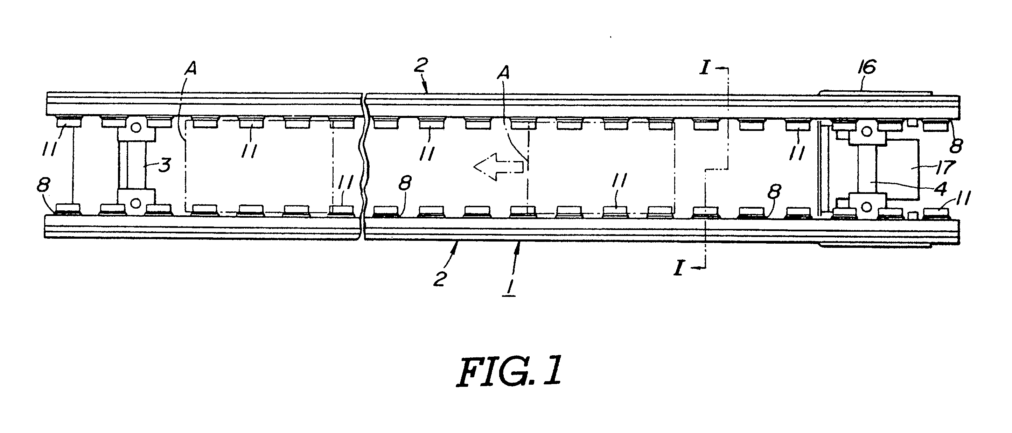

Referring to Figures 1 to 4, the embodiment of free-flow type roller conveyor system 1, according to the present invention, includes a pair of support frames 2 which are in the form of vertically extended plates longitudinally extending along a conveyor path. The frames 2 are spaced apart and extend parallel to each other. The space between the frames 2 is determined by spacers 3 and 4 arranged adjacent to respective longitudinal ends of the frames 2. In addition, one or more intermediate spacers may be provided between the frames 2 if when the length of the frames 2 is large.

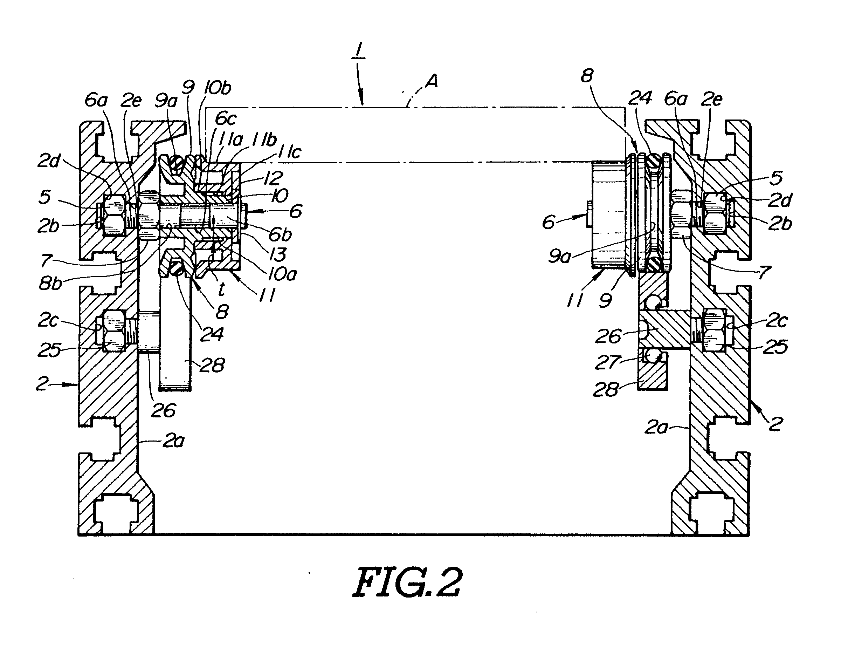

A plurality of substantially C-shaped recesses 2b and 2c are formed in the opposing surfaces 2a of the frames 2. The recesses 2b are formed adjacent to the upper end of the frames 2 and are longitudinally aligned along the substantially horizontal upper edge of the frames 2. Each recess 2b defines a space 2d within the frame 2 exposed to the surface 2a via an opening 2e. As seen from Figure 2, the diameter of the opening 2e is smaller than that of the space 2d. A nut 5 is built into each space 2d of the recesses 2a. A roller support shaft 6 formed with a threaded end portion 6a extends through the opening 2e to engage with the nut 5 within the space 2d. A fastening nut 7 is also engaged with the end portion 6a. The nut 7 is outside the opening 2e. Therefore, the nuts 5 and 7 hold the peripheral wall of the frame 2 around the opening 2e from both sides rigidly to secure the shaft 6 on the surface 2a of the frame 2. The shaft 6 thus extends from the surface 2a towards the surface 2a of the other frame 2. The axis of the shaft 6 is substantially perpendicular to the major plane of the surface 2a.

In a preferred construction, the nut 7 is welded onto the shaft 6, so that the shaft 6 can be rigidly installed by threading the end portion 6a into the nut 5.

The shaft 6 also has a bearing section 6b. A driven pulley 8 is rotatably mounted on the shaft 6 and is retained by a washer 12 and a clip 13. The pulley 8 is preferably made of a synthetic resin and formed by an outer ring section 9 and an inner cylindrical section 10. As will be seen from Figure 2, the cylindrical section 10 is axially longer than the ring section 9, so that it protrudes at the side remote from the surface 2a of the frame 2. The ring section 9 has a V-section annular groove 9a on the outer periphery thereof to receive a drive belt 24 to transmit the driving torque of a driving mechanism which will be described later. On the other hand, the outer periphery of the cylindrical section 10 serves as a bearing for a roller 11 having an outer cylindrical section 11a and inner cylindrical section 11b. The inner cylindrical section 11b frictionally contacts the outer periphery of the cylindrical section 10 of the pulley 8. Therefore, the pulley 8 and the roller 11 are associated with each other for rotating together by the friction between the outer periphery of the cylindrical section 10 of the pulley 8 and the inner periphery of the inner cylindrical section 11b of the roller 11. The outer periphery of the outer cylindrical section 11a of the roller 11 serves as a contact surface with an object A to be conveyed.

As clearly seen from Figure 2, the bearing section 6b of the shaft 6 has an annular groove 6c at the intermediate portion thereof. The groove 6c serves to reduce the contact area between the inner periphery of the bearing section 8b and the outer periphery of the shaft 6. In other words, by adjusting the axial length of the groove 6c, the contact area between the bearing section 6b and the cylindrical section 10 can be adjusted to determine the resistance against rotation of the pulley 8 about the shaft 6.

Although the embodiment shown has only a single groove 6c for adjusting the friction between the bearing section 6b and the cylindrical section 10, it is possible to provide a plurality of such grooves 6c on the outer periphery of the bearing section 6b. Furthermore, although the embodiment shown has the groove 6c on the bearing section 6b of the shaft 6, equivalent friction adjustment can be performed by providing a groove on the inner periphery of the cylindrical section 10.

A step 10b is formed on the outer periphery of the cylindrical section 10, and a projection 11c is formed on the inner periphery of the inner cylindrical section 11b of the roller 11. The height of the step 10b and of the projection 11c are the same. As a result, the outer periphery of the cylindrical section 10 and the inner periphery of the inner cylindrical section 11b have a substantially limited contact area. This reduces friction between the pulley 8 and the roller 6. Therefore, by adjusting the amount of contact area, the magnitude of the friction therebetween can be adjusted.

In a practical embodiment, the contact area between the cylindrical section 10 of the pulley 8 and the inner cylindrical section 11b of the roller 11 is set to be very small, so that the frictional driving force is small enough to be easily overcome. By overcoming this friction, rotation of the roller 11 is stopped while the pulley 8 continues to rotate.

In order to drive the roller assembly described above, a drive mechanism 30 is provided adjacent to one longitudinal end of the frames 2. The drive mechanism 30 comprises a drive motor 18 and a reduction gear unit 17. The gear unit 17 is housed within a housing to form a reduction gear box mounted on the frames 2 by means of a mounting bracket 16 which is fixed to the support frames by means of bolts 14 and nuts 15. The motor 18 cooperates with the gear unit 17 to be suspended from the frames 2 via the gear unit 17.

The gear unit 17 is driven by the motor 18, and includes a bevel gear 20 rigidly engaged with the outer end of an output shaft 18a of the motor 18 so as to be driven with the shaft 18a by the driving torque of the motor 18. The gear unit 17 further comprises a drive gear which is in the form of a bevel gear 22 and is meshed with the bevel gear 20 to be driven thereby. The bevel gear 22 is rigidly engaged with both ends of the drive shaft 21 to be driven thereby. The pulleys 23 are formed with substantially V-shaped grooves 23a to engage with the belts 24. The belts 24 are further wound around the pulleys 8 and engage with the grooves 9a of the ring sections 9 of the pulleys 8 to transmit thereto the driving torque of the motor 18.

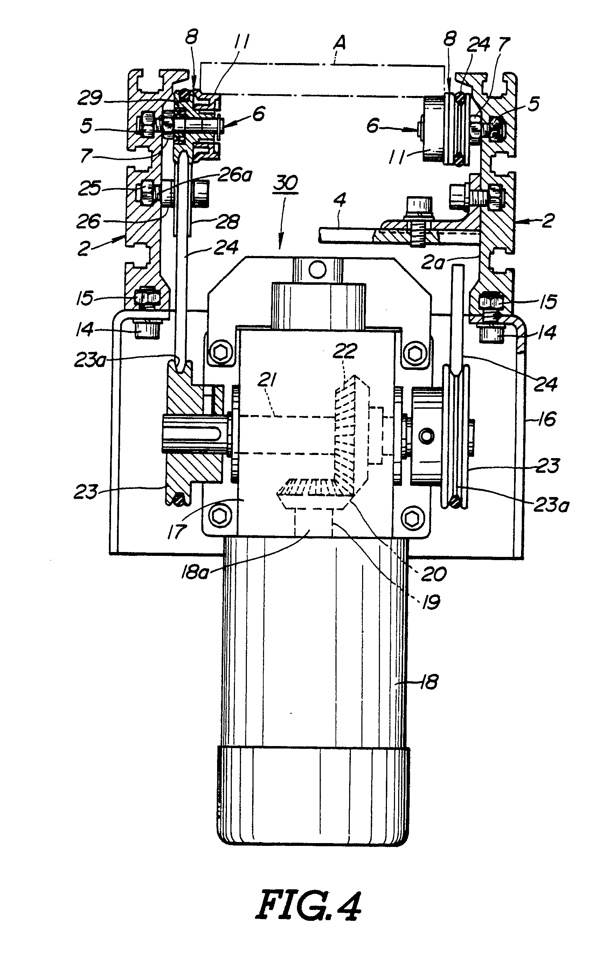

As will be seen from Figure 4, the diameter of the bevel gear 20 is smaller than that of the drive gear 22 and is meshed therewith perpendicularly. The difference in the diameters between the bevel gear 20 and the drive gear 22 serves to reduce the rotational speed of the pulleys 23 and, in turn, increase the driving torque. The bevel gear layout of the gear unit 17 serves to convert the direction of the rotational torque. This allows the motor 18 to be vertically aligned with the gear unit 17 with respect to the frames 2. This reduces the lateral space required for accommodating the driving mechanism.

Tension pulleys 28 are provided adjacent to the path of the belts 24 for adjusting their tension. The tension pulleys 28 are rotatably supported by means of pulley shafts 26, each having a threaded end section 26a which engages with a nut 25 received within a recess 2c of a frame 2. A bearing may be disposed between the outer periphery of the pulley shaft 26 and the tension pulley 28 to permit free rotation.

As shown in Figure 4, a bearing 29 is disposed between the inner periphery 8b of the pulley 8 and the outer periphery of the shaft 6 for the pulley 8 located at each longitudinal end of a series of longitudinally aligned pulleys 8. The bearing 29 serves to provide further smooth rotation, despite greater contact area between the belt 24 and the groove 9a of the ring section 9 of the end pulley 8.

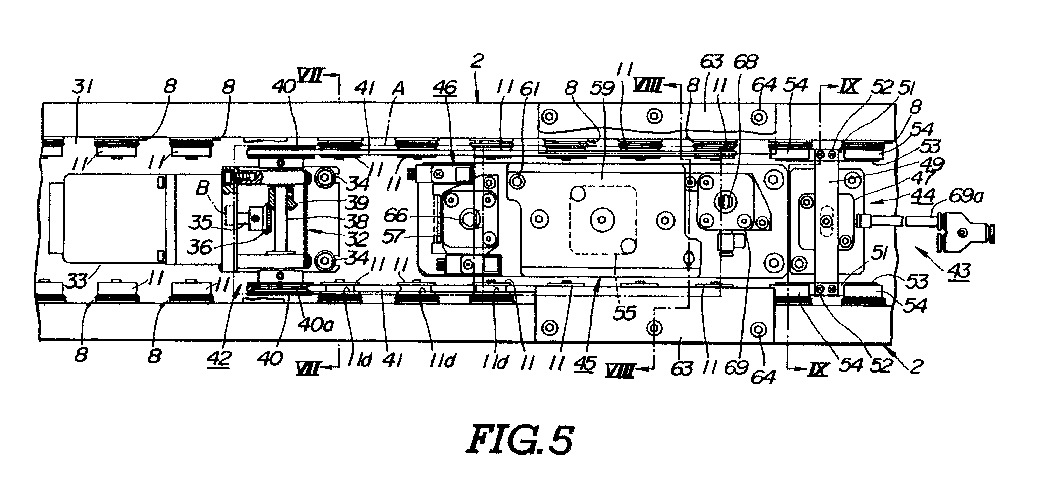

As will be appreciated from Figure 5, the conveyor system 1 extends through one or more production stations. The objects to be conveyed are to be stopped at each station for production or assembly operations. In order to allow quick stop and quick feed-out of the objects, the rollers 11 at the projection station are formed with substantially U-shaped grooves 11d. A variable speed motor 33 is mounted on a base 31 which is rigidly secured to the frame 2 by means of bolts and nuts (not shown). The drive shaft of the motor 33 is coupled to a gear box 32. Similarly to the gear unit 17, the gear box 32 includes a bevel gear 36 secured to a rotary shaft 35. The bevel gear 36 meshes with a bevel gear 39 which is secured to a gear shaft 38 rotatably supported by means of a bearing 37. Both ends of the shaft 38 extends laterally from the gear box 32. Drive pulleys 40 formed with substantially V-shaped grooves 40a are secured at both ends of the shaft 38. Drive belts 41 engage with the grooves 40a and the grooves 11d of the rollers 11. Therefore, driving torque generated by the motor 33 is transmitted to respective associated rollers 11 via the belts 41. As will be appreciated herefrom, since the driving speed of the motor 33 is variable, the rotation speed of the rollers 11 which are coupled to the motor 33 via the drive belts 41, is variable depending upon the speed of the motor 33.

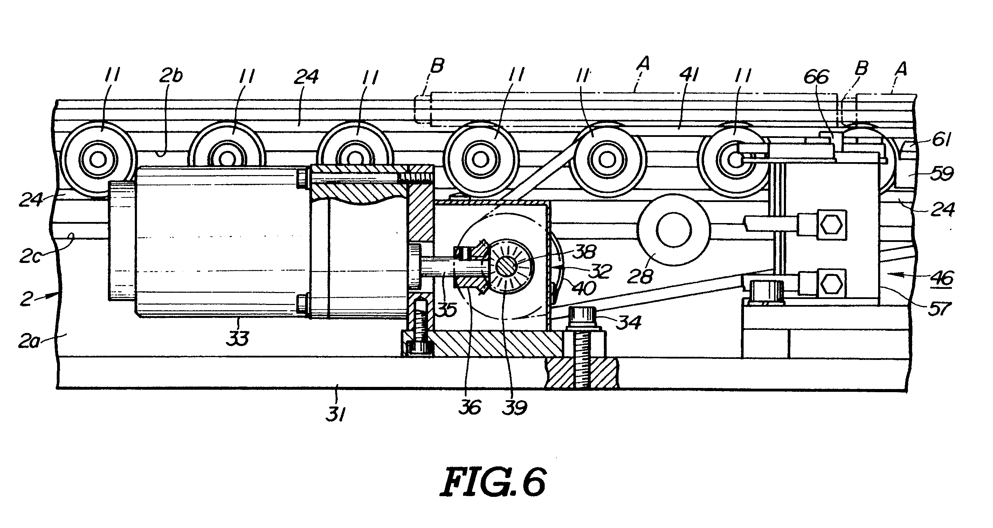

A quick stop and quick feed mechanism is provided at each of the production stations, and comprises a lifting mechanism 43 for quickly stopping the object and lifting up the object. The lifting mechanism 43 comprises a brake device 44, a back-up device 45 and a stopper device 46 as shown in Figures 5 and 6.

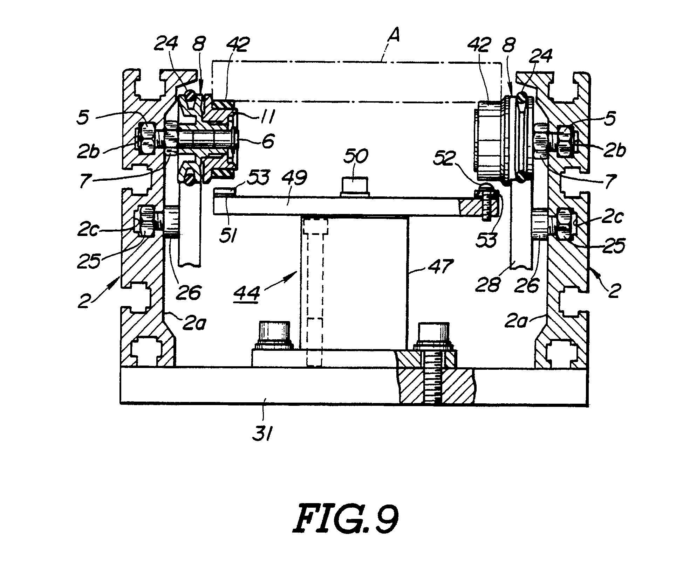

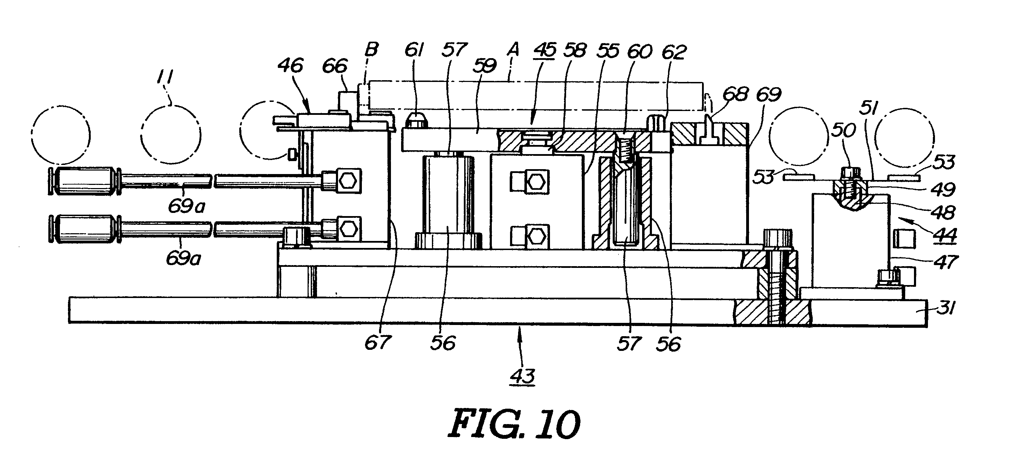

The brake device 44 has an air cylinder 47. An actuation rod 48 of the air cylinder 47 is connected to a support member 49 which extends laterally between laterally aligned rollers 11, as shown in Figures 9 and 10. The support member 49 is secured on the top of the actuation rod 48 by means of a bolt 50. A plurality of brake assemblies, each of which comprises a leaf strip 51 and rubber pads 53 are secured onto lateral ends of the support member 49 by means of screws 52. The leaf spring 51 extends longitudinally and is secured at about the longitudinal centre thereof. The leaf spring 51 has spring characteristics normally to bias both its longitudinal ends away from the support member 49. The ends of the leaf springs 51 oppose the longitudinally aligned pair of rollers 11. The rubber pads 53 are bonded on the surface of the leaf spring 51, at the position opposing the rollers 11. On the other hand, a rubber ring 42 is fitted onto the outer periphery of the rollers 11 which oppose the rubber pads 53, as is particularly shown in Figure 9.

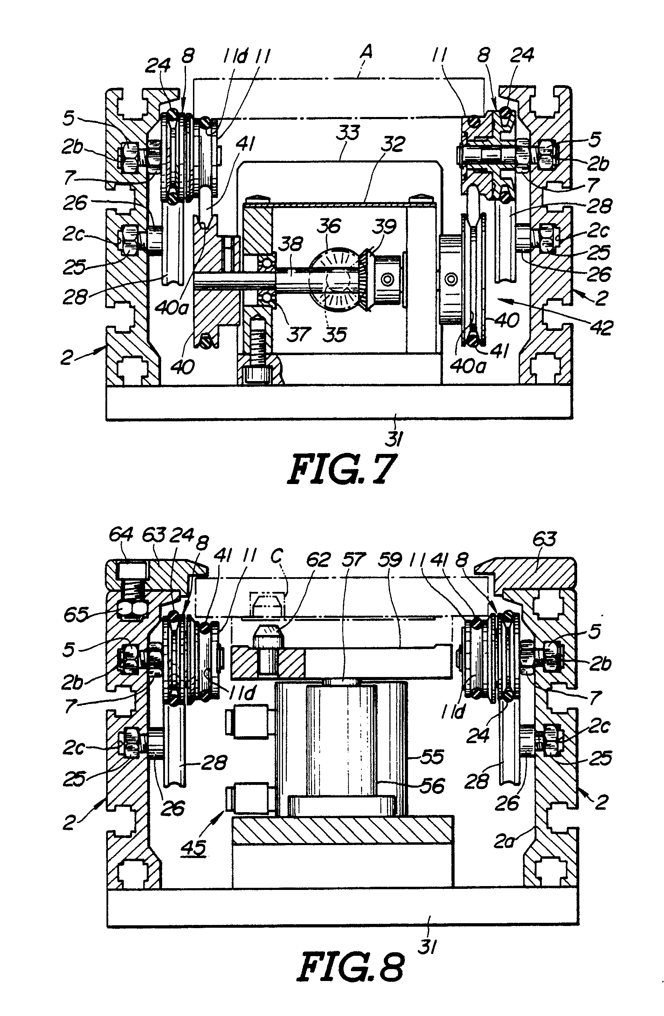

As shown in Figure 8, the back-up device 45 includes an air cylinder 55. The air cylinder 55 has a cylinder rod 58 connected to a plate-shaped platform 59 by means of a screw 60. At the longitudinal ends, the platform 59 is connected to the tops of guide pins 57 which are vertically movable via a guide cylinder 56, as shown in Figure 10. Positioning pins 61 and 62 project from the upper surface of the platform 59. The orientation of the pins 61 and 62, and the configurations thereof may be variable depending upon the objects. Namely, the objects may be formed with positioning holes C, and the pins 61 and 62 then engage with the positioning holes C for precisely positioning the object A on the platform 59.

At the longitudinally corresponding position to the platform 59, upper guides 63 are secured onto the top of the frame 2 by means of bolts 64 and buts 65. The upper guides 63 are elongated in the longitudinal direction of the flow path, and extend laterally inward so as to restrict upward movement of the object A on the platform 59.

As shown in Figure 10, the stopper device 46 also includes a stop 66 vertically movable by means of an air cylinder 67 and an escaper 68 which is vertically movable by means of an air cylinder 69. The air cylinders 67 and 69 are synchronously operable for synchronously operating the stop 66 and the escaper 68. The stop 66 is designed to contact with a shock absorbing member B provided on the front edge of the object A when it is lifted at the lifted-up position. Since the shock exerted on the object A by collision with the stop 66 can be successfully absorbed by the shock absorbing member B, rebounding of the object A can be satisfactorily prevented. As set forth, since the stop 66 and the escaper 68 are synchronously operated between an up position and a down position, the escaper 68 prevents the subsequently fed objects A from entering the platform 59.

The air cylinders 47, 55, 67 and 69 are connected to a pressurized air source via air supply lines 69a and 69b.

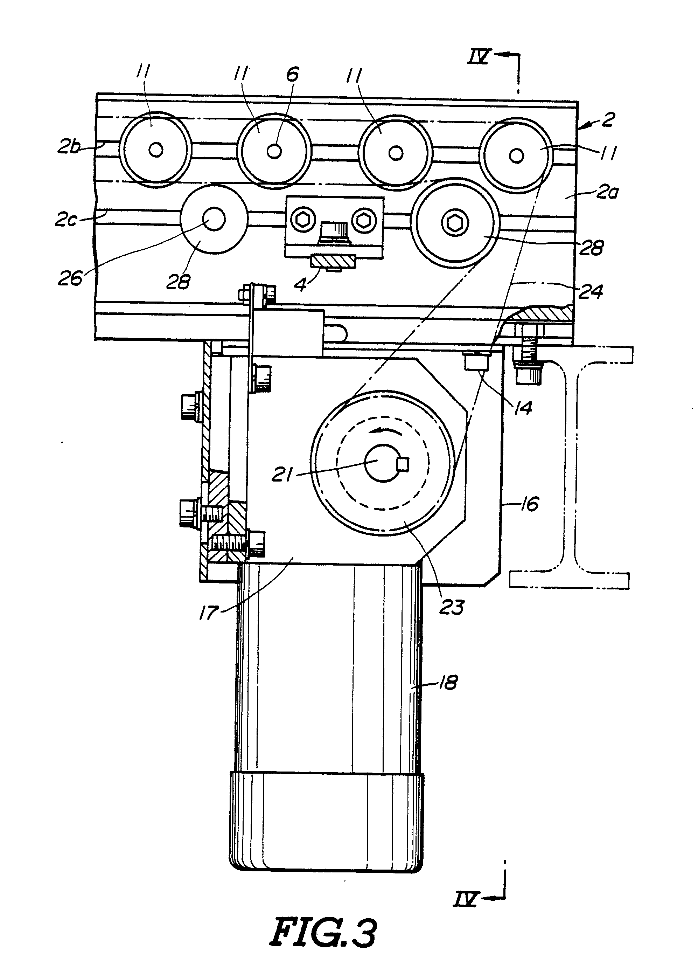

In operation, the motor 18 is driven for driving the pulleys 23 through the gear unit 17. In this embodiment, the motor 18 is driven to drive the pulleys 23 in the counter-clockwise direction as indicated by an arrow in Figure 3. By rotation of the pulleys 23, the belts 24 are driven to rotate respective pulleys 8 in the counter-clockwise direction. Since the rollers 11 cooperate frictionally with the pulleys 8, the rollers 11 are thus driven in the counter-clockwise direction. In this condition, an object A put on the conveyor line is fed in the direction indicated by the arrow in Figure 2.

The rotational speed of the variable speed motor 33 is set so that the rollers 11 on which the belts 41 are wound, can rotate in synchronism with rotation of the associated pulleys 8. When an object A transferred on the conveyor line by the rotation of the rollers 11, reaches the position corresponding to the brake device 44, the presence of the object A above the brake device 44 is detected by an appropriate sensor means, such as a limit switch, proximity switch, optical sensor or an electromagnetic sensor. Upon detection of the presence of the object A above the brake device 44, the air cylinder 47 is actuated to lift the support member 49 upwardly so that the rubber pads 53 can be resiliently depressed onto the periphery of the corresponding rollers 11. Thus, the rubber pads 53 respectively contact with the rubber rings 42 on the roller periphery to decelerate the rotation speed of the associated rollers 11. In this way, the feed speed of the object A is reduced.

At this time, the rotational speed of the variable speed motor 33 is reduced in synchronism with the decrease of the feed speed by a controller in known manner.

The object A thus decelerated is further fed at a lowered feed speed. In synchronism with this, the air cylinder 67 of the stopper device 46 is actuated to lift up the stop 66. At the same time, the air cylinder 69 is also actuated to lift the escaper 68. So as to allow synchronous upward movement of the stop 66 and the escaper 68 without causing interference to movement of the object A before it collides with the stop 66, the actuation timing of the air cylinders 67 and 69 is adjusted to lift the stop 66 and the escaper 68 after the object A has passed over the escaper 68, but before the object A reaches the stop 66. During this period, the object A is fed at the reduced speed to collide with the stop 66 at the shock absorbing member B. This collision is detected by a detector (not shown), and the variable speed motor 33 is then stopped. In this way, the shock of the collision can be reduced, so that the object can be stopped gently.

In synchronism with stopping of the variable speed motor 33, the air cylinder 55 of the back-up device 45 is actuated to lift the platform 59 upwardly. During this movement, the pins 61 and 62 engage with the corresponding openings C of the object A. The platform 59 is further lifted up until the upper surface of the object A engages with the upper guides 63. Preferably, the stroke of the upward movement of the platform 59 is determined in relation to the thickness of the object A, and the vertical orientation of the upper guide 63.

While the object A is lifted to the position where the upper surface of the object A engages with the upper guide 63, the required assembly or production operation is performed. The air cylinder 55 is held at the lifted-up position for a given period of time which should be slightly longer than a maximum possible action time.

After the given period of time has elapsed, or alternatively in response to a manual feed command input, the air cylinder 55 is actuated to lower the platform 59 with the object A. By the downward movement of the platform 59, the lower surface of the object A returns to contact the rollers 11 which are stopped by stopping the variable speed motor 33. The platform 59 moves further downwardly to release engagement between the pins 61 and 62 and the openings C of the object A, so the object A becomes free to be fed.

In synchronism with downward movement of the platform 59 by the action of the air cylinder 55, the air cylinders 67 and 69 are activated to lower the s top 66 and the escaper 68, so that the object A can be fed to the next production station.

After the stop 66 and the escaper 68 have been moved to their initial and down position, the variable speed motor 33 is energized to drive the association rollers 11 via the belts 41. At this time, the variable speed motor 33 is driven at relatively high speed for quickly feeding the object A from the production station.

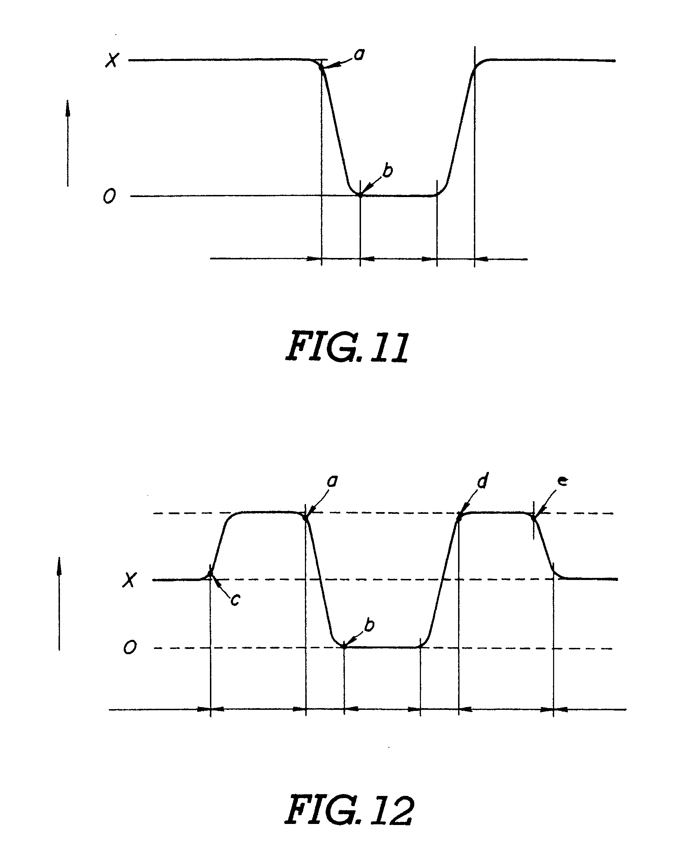

The object feed speed variation to accomplish the aforementioned quick stop and quick feed in the production station is shown in Figure 11. As will be seen from Figure 11, a point a represents the object position reaching the brake device 44. Therefore, from the point a , the object A is decelerated by deceleration of the variable speed motor driving speed. A point b represents the object's position when colliding with the stop 66. As set forth, the variable speed motor 33 is stopped in response to collision of the shock absorber member B of the object A and the stop 66. Therefore, at the point b , the feed speed becomes zero.

After the production or assembly operation, the variable speed motor 33 starts driving to accelerate the feed speed of the object A. The acceleration characteristics of the feed is generally determined depending on the acceleration characteristics of the variable speed motor 33. Therefore, by selecting an appropriate variable speed motor 33, desired quick feed characteristics can be obtained by rapidly accelerating the roller speed.

Figure 12 shows an alternative object feed pattern which can also be achieved by the embodiment. In this feed pattern, the variable speed motor 33 is temporarily driven at a higher speed HIGH speed, when the object reaches a predetermined point upstream of the brake device 44. By driving the variable speed motor 33 at HIGH speed, the object A is accelerated to be forcingly fed into the production station. Similarly to the foregoing pattern, the variable speed motor 33 starts deceleration when the object A reaches the point a and stops at the point b where the object A contacts the stop 66.

After the production operation, the variable speed motor 33 is accelerated to HIGH speed. After reaching HIGH speed at a point d , the driving speed of the variable speed motor 33 is maintained at HIGH speed for a given period of time, until the object A reaches a point e . Thereafter, it is decelerated to a normal driving speed which is lower than the HIGH speed.

## Claims

1. A conveyor system (1) comprising:
   a pair of frames (2) extending longitudinally and in substantially parallel relationship to each other;
   a plurality of roller assemblies (6, 11) mounted on said frame (2), each of said roller assemblies (6, 11) including a roller (11) rotatably supported on said frame (2) and aligned with rollers (11) of other roller assemblies (6, 11) to define a conveying path through which an object (A) to be conveyed is transferred;
   a driving mechanism (30) for rotatingly driving said rollers (11) in said roller assemblies (6, 11) for exerting feed force on said object (A); and
   friction means (11b, 10) interposed between said driving mechanism (30) and said rollers (11) of said roller assemblies (6, 11) for allowing slip to occur between said driving mechanism (30) and said rollers (11) when the load on said rollers (11) causes the resistance of said rollers (11) to rotation to exceed a given magnitude;
   said friction means (11b, 10) being provided for each of said rollers (11) so as to limit power transmission between said driving mechanism (30) and each of said rollers (11) and independently of the other said rollers (11), so that when one of said rollers (11) is slipping relative to said driving mechanism (30), the other said rollers (11) are driven to rotate by said driving mechanism (30);characterized by means (43), at a predetermined position in said conveyor path, for quickly stopping and quickly feeding out said object (A), said means (43) including an auxiliary driving mechanism (33) associated with said rollers (11) located at positions corresponding to the position of said means (43) and having a variable driving speed for varying the rotational speed of the associated said rollers (11).

2. A conveyor system (1) according to claim 1 wherein said driving mechanism (30) comprises a drive motor (18), a power train (17) for transmitting the driving torque of said drive motor (18), and a plurality of pulleys (8) drivingly associated with said power train (17) to be driven by said driving torque of said drive motor (18), each of said pulleys (8) being associated with one of said rollers (11) for rotation therewith, and said friction means (11b, 10) being effective to connect said driving mechanism (30) to the corresponding said roller (11).

3. A conveyor system (1) according to claim 2 wherein said friction means (11b, 10) comprises a first periphery (11b) of said roller (11) and a second periphery (10) of said pulley (8) associated therewith, said first and second peripheries (11b, 10) frictionally engaging for transmitting driving torque from said drive motor (18) via said power train (17), said first and second peripheries (11b, 10) allowing mutual slip for allowing rotation of said roller (11) to stop in response to said resistance greater than said given magnitude while said pulley (8) continues to rotate.

4. A conveyor system (1) according to claim 3 wherein said roller (11) and said pulley (8) associated therewith are coaxially arranged and supported by a common shaft (6) extending from said frame (2).

5. A conveyor system (1) according to claim 3 which further comprises means (11c, 10b) for limiting the contact area between said first and second peripheries (11b, 10), which contact area limiting means (11c, 10b) determines the contact area between said first and second peripheries (11b, 10) and whereby determines the magnitude of the friction between said first and second peripheries (11c, 10b).

6. A conveyor system (1) according to claim 1 wherein said auxiliary driving mechanism (33) decreases the rotational speed of said associated rollers (11) when said object (A) reaches a first predetermined point in said conveyor line and stops rotation for a given period of time when said object (A) reaches a second predetermined point for stopping said object (A) at said second point.

7. A conveyor system (1) according to claim 1 wherein said auxiliary driving mechanism (33) increases the rotational speed of said associated rollers (11) when said object (A) reaches a first predetermined point in said conveyor line, decelerates the rotational speed of said associated rollers (11) when said object (A) reaches a second predetermined point downstream of said first predetermined point, and stops rotation for a given period of time when said object (A) reaches a third predetermined point for stopping said object (A) at said third point.

8. A conveyor system (1) according to claim 6 or claim 7 wherein said auxiliary driving mechanism (33) resumes rotation after said given period of time for driving said associated rollers (11) at a given speed.

9. A conveyor system (1) according to claim 1 or claim 6 wherein said quickly stopping and quickly feeding out means (43) further comprises a lifting means (59) operable between an initial down position and a lifted-up position where it lifts up said object (A) away from said conveyor line.

10. A conveyor system (1) according to claim 9 wherein said lifting means (59) is located at said second point.

11. A conveyor system (1) according to claim 10 wherein said quickly stopping and quickly feeding out means (43) further comprises a braking means (44) at a position corresponding to said first point and active on one or more said rollers (11) located at said first point for slowing down the rotational speed of the corresponding said rollers (11).

12. A roller conveyor system (1) according to claim 1 wherein each of said roller assemblies (6, 11) includes a first rotary component (11) having a first periphery (11a) contacting said object (A) for exerting feeding force thereon and a second periphery (11b), and a second rotary component (8) having a third periphery (10) frictionally engaging with said second periphery (11b) of said first rotary component (11) for coupling said first and second rotary components (11, 8), the magnitude of the friction established between said second and third peripheries (11b, 10) being so determined as normally to maintain frictional engagement and to break frictional engagement to allow slip between said second and third peripheries (11b, 10) for stopping rotation of said first rotary component (11) while said second rotary component (8) maintains rotation, in response to a resistance against rotation of said first rotary component (11) exerted on said first periphery (11a) greater than a given magnitude.

13. A conveyor system (1) according to claim 12 wherein said driving mechanism (30) comprises a drive motor (18) and a power train (17) for transmitting the driving torque of said drive motor (18), said power train (17) including a drive belt (24) wound around said second rotary components (8) of said roller assemblies (6, 11) for transmitting driving torque.

14. A conveyor system (1) according to claim 13 wherein said first rotary component (11) and said second rotary component (8) are coaxially arranged and supported by a common shaft (6) extending from a pair of support frames (2) respectively extending along said conveyor path.

15. A conveyor system (1) according to claim 12 further comprising means (11c, 10b) for limiting the contact area between said second and third peripheries (11b, 10), which contact area limiting means (11c,10b) determines the contact area between said second and third peripheries (11b, 10) and thereby determines the magnitude of the friction between said second and third peripheries (11b, 10).

16. A conveyor system (1) according to claim 12 further comprising means (43), at a predetermined position in said conveyor path, for quickly stopping and quickly feeding out said object (A), said means (43) including an auxiliary driving mechanism (33) associated with said first rotary components (11) of said roller assemblies (6, 11) located at positions corresponding to the position of said means (43) and having a variable driving speed for varying the rotational speed of the associated first rotary components (11).

17. A conveyor system (1) according to claim 16 wherein said auxiliary driving mechanism (33) decelerates the rotational speed of said associated first rotary components (11) when said object (A) reaches a first predetermined point in said conveyor line, and stops rotating for a given period of time when said object (A) reaches a second predetermined point for stopping said object (A) at said second point.

18. A conveyor system (1) according to claim 16 wherein said auxiliary driving mechanism (33) accelerates the rotational speed of said associated first rotary components (11) when said object (A) reaches a first predetermined point in said conveyor line, decelerates the rotational speed of said associated first rotary components (11) when said object (A) reaches a second predetermined point downstream of said first predetermined point, and stops rotation for a given period of time when said object (A) reaches a third predetermined point for stopping said object (A) at said third point.

19. A conveyor system (1) according to claim 17 or claim 18 wherein said auxiliary driving mechanism (33) resumes rotation after said given period of time for driving said associated first rotary components (11) at a given speed.

20. A conveyor system (1) according to claim 16 or claim 17 wherein said quickly stopping and quickly feeding out means (43) further comprises a lifting means (59) operable between an initial down position and a lifted-up position where it lifts up said object (A) away from said conveyor path.

21. A conveyor system (1) according to claim 20 wherein said lifting means (59) is positioned at said second point.

22. A conveyor system (1) according to claim 20 wherein said quickly stopping and quickly feeding out means (43) further comprises a braking means (44) at a position corresponding to said first point and active on one or more of said first rotary components (11) located at said first point for slowing down the rotational speed of the corresponding said first rotary components (11).

**Revendications**

1. Appareil transporteur (1) comprenant :

une paire de châssis (2) disposés longitudinalement et sensiblement parallèles l'un à l'autre,

plusieurs ensembles à galet (6, 11) montés sur le châssis (2), chaque ensemble à galet (6, 11) comprenant un galet (11) supporté sur le châssis (2) afin qu'il puisse tourner et aligné sur des galets (11) d'autres ensembles à galet (6, 11) afin qu'un trajet de transport soit délimité pour le transfert d'un objet (A) à transporter,

un mécanisme d'entraînement (30) destiné à entraîner en rotation les galets (11) des ensembles (6, 11) afin qu'une force d'avance soit exercée sur l'objet (A), et

un dispositif de friction (11b, 10) placé entre le mécanisme d'entraînement (30) et les galets (11) des ensembles à galet (6, 11) afin qu'un glissement puisse se produire entre le mécanisme d'entraînement (30) et les galets (11) lorsque la charge appliquée aux galets (11) provoque le dépassement d'une amplitude fixée par la résistance des galets (11) à la rotation,

un dispositif de friction (11b, 10) étant associé à chacun des galets (11) afin qu'il limite la transmission d'énergie entre le mécanisme d'entraînement (30) et chacun des galets (11), indépendamment des autres galets (11), si bien que, lorsque l'un des galets (11) glisse par rapport au mécanisme d'entraînement (30), les autres galets (11) sont entraînés en rotation par le mécanisme d'entraînement (30),

caractérisé par un dispositif (43) placé en position prédéterminée dans le trajet de transport et destiné à arrêter rapidement et à extraire rapidement l'objet (A), le dispositif (43) comprenant un mécanisme d'entraînement auxiliaire (33) associé aux galets (11) et occupant des positions correspondant à la position dudit dispositif (43) et ayant une vitesse variable afin qu'il fasse varier la vitesse de rotation des galets associés (11).

2. Appareil transporteur (1) selon la revendication 1, dans lequel le mécanisme d'entraînement (30) comporte un moteur (18) d'entraînement, un train moteur (17) destiné à transmettre le couple d'entraînement du moteur (18), et plusieurs poulies (8) associées au train moteur (17) afin qu'elles soient entraînées par le couple d'entraînement du moteur (18), chacune des poulies (8) étant associée à l'un des galets (11) afin qu'elle tourne avec lui, le dispositif de friction (11b, 10) assurant le raccordement du mécanisme d'entraînement (30) au galet correspondant (11).

3. Appareil transporteur (1) selon la revendication 2, dans lequel le dispositif de friction (11b, 10) comporte une première périphérie (11b) du galet (11) et une seconde périphérie (10) de la poulie associée (8), la première et la seconde périphérie (11b, 10) coopérant par friction afin que le couple d'entraînement du moteur (18) soit transmis par le train moteur (17), la première et la seconde périphérie (11b, 10) permettant un glissement mutuel qui permet l'arrêt de la rotation du galet (11) lorsque ladite résistance dépasse l'amplitude déterminée alors que la poulie (8) continue à tourner.

4. Appareil transporteur (1) selon la revendication 3, dans lequel le galet (11) et la poulie associée (8) sont disposés coaxialement et sont supportés par un arbre commun (6) dépassant du châssis (2).

5. Appareil transporteur (1) selon la revendication 3, qui comporte en outre un dispositif (11c, 10b) destiné à limiter la surface de contact de la première et de la seconde périphérie (11b, 10), le dispositif de limitation de la surface de contact (11c, 10b) déterminant la surface de contact entre la première et la seconde périphérie (11b, 10) et déterminant ainsi l'amplitude du frottement entre la première et la seconde périphérie (11c, 10b).

6. Appareil transporteur (1) selon la revendication 1, dans lequel le mécanisme auxiliaire d'entraînement (33) réduit la vitesse de rotation des galets associés (11) lorsque l'objet (A) atteint un premier point prédéterminé de la chaîne transporteuse et arrête la rotation pendant une période donnée lorsque l'objet (A) atteint un second point prédéterminé afin que l'objet (A) soit arrêté au second point.

7. Appareil transporteur (1) selon la revendication 1, dans lequel le mécanisme d'entraînement auxiliaire (33) augmente la vitesse de rotation des galets associés (11) lorsque l'objet (A) atteint un premier point prédéterminé dans la chaîne transporteuse, réduit la vitesse de rotation des galets associés (11) lorsque l'objet (A) atteint un second point prédéterminé qui est en aval du premier point prédéterminé, et arrête la rotation pendant une période donnée lorsque l'objet (A) atteint un troisième point prédéterminé afin que l'objet (A) soit arrêté au troisième point.

8. Appareil transporteur (1) selon la revendication 6 ou 7, dans lequel le mécanisme d'entraînement auxiliaire (33) reprend la rotation après la période donnée d'entraînement des galets associés (1l) à une vitesse donnée.

9. Appareil transporteur (1) selon la revendication 1 ou 6, dans lequel le dispositif (43) d'arrêt rapide et d'extraction rapide comporte en outre un dispositif de soulèvement (59) qui fonctionne entre une position initiale basse et une position levée dans laquelle il soulève l'objet (A) au-dessus de la chaîne transporteuse.

10. Appareil transporteur (1) selon la revendication 9, dans lequel le dispositif de soulèvement (59) est disposé au second point.

11. Appareil transporteur (1) selon la revendication 10, dans lequel le dispositif (43) d'arrêt rapide et d'extraction rapide comporte en outre un dispositif de freinage (44) occupant une position correspondant au premier point et agissant sur un ou plusieurs des galets (11) qui sont placés au premier point afin que la vitesse de rotation des galets correspondants (11) soit réduite.

12. Appareil transporteur (1) à galets, selon la revendication 1, dans lequel chacun des ensembles à galet (6, 11) comporte un premier élément rotatif (11) ayant une première périphérie (11a) qui est au contact de l'objet (A), afin qu'il applique à celui-ci une force d'avance, et une seconde périphérie (11b), et un second élément rotatif (8) ayant une troisième périphérie (10) qui coopère avec frottement avec la seconde périphérie (11b) du premier élément rotatif (11) afin que le premier et le second élément rotatif (11, 8) soient couplés, l'amplitude du frottement établie entre la seconde et la troisième périphérie (11b, 10) étant déterminée de manière qu'une coopération normale par frottement soit déterminée et que la coopération par frottement soit supprimée et permette un glissement entre la seconde et la troisième périphérie (11b, 10) et l'arrêt de la rotation du premier élément rotatif (11) alors que le second élément rotatif (8) continue à tourner, lorsqu'une résistance s'opposant à la rotation du premier élément rotatif (11) et s'exerçant à la première périphérie (11a) dépasse une amplitude donnée.

13. Appareil transporteur (1) selon la revendication 12, dans lequel le mécanisme d'entraînement (30) comporte un moteur d'entraînement (18) et un train moteur (17) destiné à transmettre le couple d'entraînement au moteur (18), le train moteur (17) comprenant une courroie d'entraînement (24) passant autour des seconds éléments rotatifs (8) des ensembles à galet (6, 11) afin qu'un couple d'entraînement leur soit transmis.

14. Appareil transporteur (1) selon la revendication 13, dans lequel le premier élément rotatif (11) et le second élément rotatif (8) sont disposés coaxialement et sont supportés par un arbre commun (6) dépassant d'une paire de châssis de support (2) disposés respectivement le long du trajet de transport.

15. Appareil transporteur (1) selon la revendication 12, comprenant en outre un dispositif (11c, 10b) destiné à limiter la surface de contact de la seconde et de la troisième périphérie (11b, 10), le dispositif destiné à limiter la surface de contact (11c, 10b) déterminant la surface de contact entre la seconde et la troisième périphérie (11b, 10) et déterminant ainsi l'amplitude du frottement de la seconde et de la troisième périphérie (11b, 10).

16. Appareil transporteur (1) selon la revendication 12, comprenant en outre un dispositif (43) qui occupe une position prédéterminée sur le trajet de transport et qui est destiné à arrêter rapidement et à extraire rapidement l'objet (A), ce dispositif (43) comprenant un mécanisme d'entraînement auxiliaire (33) associé aux premiers éléments rotatifs (11) des ensembles à galet (6, 11) occupant des positions correspondant à la position dudit dispositif (43) et ayant une vitesse variable d'entraînement destinée à faire varier la vitesse de rotation des premiers éléments rotatifs associés (11).

17. Appareil transporteur (1) selon la revendication 16, dans lequel le mécanisme d'entraînement auxiliaire (33) réduit la vitesse de rotation des premiers éléments rotatifs associés (11) lorsque l'objet (A) atteint un premier point prédéterminé dans la chaîne transporteuse, et interrompt la rotation pendant une période donnée lorsque l'objet (A) atteint un second point prédéterminé afin que l'objet (A) soit arrêté au second point.

18. Appareil transporteur (1) selon la revendication 16, dans lequel le mécanisme d'entraînement auxiliaire (33) augmente la vitesse de rotation des premiers éléments rotatifs associés (11) lorsque l'objet (A) atteint un premier point prédéterminé dans la chaîne transporteuse, réduit la vitesse de rotation des premiers éléments rotatifs associés (11) lorsque l'objet (A) atteint un second point prédéterminé qui est en aval du premier point prédéterminé, et arrête la rotation pendant une période donnée lorsque l'objet (A) atteint un troisième point prédéterminé afin que l'objet (A) soit arrêté au troisième point.

19. Appareil transporteur (1) selon la revendication 17 ou 18, dans lequel le mécanisme d'entraînement auxiliaire (33) recommence à tourner après la période donnée afin qu'il entraîne les premiers éléments rotatifs associés (11) à une vitesse donnée.

20. Appareil transporteur (1) selon la revendication 16 ou 17, dans lequel le dispositif (43) d'arrêt rapide et d'extraction rapide comporte en outre un dispositif de soulèvement (59) destiné à travailler entre une position initiale basse et une position haute dans laquelle il soulève l'objet (A) au-dessus du trajet de transport.

21. Appareil transporteur (1) selon la revendication 20, dans lequel le dispositif de soulèvement (59) est placé au second point.

22. Appareil transporteur (1) selon la revendication 20, dans lequel le dispositif (43) d'arrêt rapide et d'extraction rapide comporte en outre un dispositif de freinage (44) occupant une position correspondant au premier point et agissant sur un ou plusieurs des premiers éléments rotatifs (11) qui sont placés au premier point afin qu'il réduise la vitesse de rotation des premiers éléments rotatifs correspondants

(11).

**Ansprüche**

1. Ein Fördersystem (1) mit:
einem Paar längsverlaufender und im wesentlichen parallel zueinander angeordneter Rahmen (2);
einer Mehrzahl am genannten Rahmen (2) montierter Rollenanordnungen (6,11), wobei jede der genannten Rollenanordnungen (6,11) eine Rolle (11) umfaßt, die drehbar am genannten Rahmen (2) abgestützt und mit Rollen (11) anderer Rollenanordnungen (6,11) zusammengestellt ist um eine Förderbahn zu definieren, durch die ein zu fördernder Gegenstand (A) transportiert wird;
einem Antriebsmechanismus (30) für den Drehantrieb der genannten Rollen (11) in den genannten Rollenanordnungen (6,11), um eine Vorschubkraft auf den genannten Gegenstand (A) auszuüben; und
einer zwischen dem genannten Antriebsmechanismus (30) und den genannten Rollen (11) der genannten Rollenanordnungen (6,11) angeordneten Friktionseinrichtung (11b,10), die das Auftreten von Schlupf zwischen dem genannten Antriebsmechanismus (30) und den genannten Rollen (11) ermöglicht, wenn die Last an den genannten Rollen (11) bewirkt, daß der Drehwiderstand der genannten Rollen (11) einen bestimmten Wert überschreitet; wobei die genannte Friktionseinrichtung (11b,10) für jede der genannten Rollen (11) vorgesehen ist, um die Kraftübertragung zwischen dem genannten Antriebsmechanismus (30) und jeder der genannten Rollen (11) sowie unabhängig von den anderen genannten Rollen (11) zu begrenzen, so daß dann, wenn eine der genannten Rollen (11) relativ zum genannten Antriebsmechanismus (30) rutscht, die anderen genannten Rollen (11) durch den genannten Antriebsmechanismus (30) drehangetrieben werden, **gekennzeichnet** durch
eine Einrichtung (43) an einer vorbestimmten Position in der genannten Förderbahn zum schnellen Stoppen und schnellen Abführen des genannten Gegenstandes (A), wobei die genannte Einrichtung (43) einen Hilfsantriebsmechanismus (33) umfaßt, der den genannten Rollen (11) zugeordnet ist, die an Positionen angebracht sind, die der Position der genannten Einrichtung (43) entsprechen, und der eine veränderliche Antriebsgeschwindigkeit zum Verändern der Drehgeschwindigkeit der zugeordneten genannten Rollen (11) aufweist.

2. Ein Fördersystem (1) nach Anspruch 1, in welchem der genannte Antriebsmechanismus (30) einen Antriebsmotor (l8), eine Kraftübertragung (17) zum Übertragen des Antriebsmomentes des genannten Antriebsmotors (18) und eine Mehrzahl von Scheiben (8) umfaßt, die in Antriebsverbindung mit der genannten Kraftübertragung (17) stehen, um durch das genannte Antriebsmoment des genannten Antriebsmotors (18) angetrieben zu werden, wobei jede der genannten Scheiben (18) einer der genannten Rollen (11) zwecks Drehung mit derselben zugeordnet ist und die genannte Friktionseinrichtung (11b,10) eine Verbindung des genannten Antriebsmechanismus (30) mit der entsprechenden genannten Rolle (11) bewirkt.

3. Ein Fördersystem (1) nach Anspruch 2, in welchem die genannte Friktionseinrichtung (11b,10) eine erste Umfangsfläche (11b) der genannten Rolle (11) und eine zweite umfangsfläche (10) der dieser zugeordneten Scheibe (8) umfaßt, wobei die genannte erste und zweite Umfangsfläche (11b,10) zwecks übertragung des Antriebsmomentes vom genannten Antriebsmotor (18) über die genannte Kraftübertragung (17) in Friktionseingriff stehen, und wobei die genannte erste und zweite Umfangsfläche (11b,10) gegenseitigen Schlupf ermöglichen, um die Drehung der genannten Rolle (11) in Reaktion auf den den genannten bestimmten Wert übersteigenden genannten Widerstand stoppen zu können, während die genannte Scheibe (8) sich weiterhin dreht.

4. Ein Fördersystem (1) nach Anspruch 3, in welchem die genannte Rolle (11) und die dieser zugeordnete Scheibe (8) koaxial angeordnet und mittels einer gemeinsamen, sich vom genannten Rahmen (2) erstreckenden Achse (6) abgestützt sind.

5. Ein Fördersystem (1) nach Anspruch 3, welches ferner eine Einrichtung (11c,10b) zum Begrenzen der Kontaktfläche zwischen der genannten ersten und zweiten Umfangsfläche (11b,10) umfaßt, welche Kontaktflächen-Begrenzungseinrichtung (11c,10b) die Kontaktfläche zwischen der genannten ersten und zweiten Umfangsfläche (11b,10) und dadurch die Größe der Friktion zwischen der genannten ersten und zweiten Umfangsfläche (11c,10b) bestimmt.

6. Ein Fördersystem (1) nach Anspruch 1, in welchem der genannte Hilfsantriebsmechanismus (33) die Drehgeschwindigkeit der genannten zugeordneten Rollen (11) reduziert, wenn der genannte Gegenstand (A) eine erste vorbestimmte Stelle in der genannten Förderstrecke erreicht, und die Drehung für einen bestimmten Zeitraum stoppt, wenn der genannte Gegenstand (A) eine zweite vorbestimmte Stelle zum Stoppen des genannten Gegenstandes (A) an der genannten zweiten Stelle erreicht.

7. Ein Fördersystem (1) nach Anspruch 1, in welchem der genannte Hilfsantriebsmechanismus (33) die Drehgeschwindigkeit der genannten zugeordneten Rollen (11) erhöht, wenn der genannte Gegenstand (A) eine erste vorbestimmte Stelle in der genannten Förderstrecke erreicht, die Drehgeschwindigkeit der genannten ]zugeordneten Rollen verzögert, wenn der genannte Gegenstand (A) eine zweite vorbestimmte Stelle bahnabwärts der genannten ersten vorbestimmten Stelle erreicht, und die Drehung für einen bestimmten Zeitraum stoppt, wenn der genannte Gegenstand (A) eine dritte vorbestimmte Stelle zum Stoppen des genannten Gegenstandes (A) an der genannten dritten Stelle erreicht.

8. Ein Fördersystem (1) nach Anspruch 6 oder Anspruch 7, in welchem der genannte Hilfsantriebsmechanismus (33) nach dem genannten bestimmten Zeitraum die Drehung zwecks Antrieb der genannten zugeordneten Rollen (11) mit einer bestimmten Geschwindigkeit wiederaufnimmt.

9. Ein Fördersystem (1) nach Anspruch 1 oder Anspruch 6, in welchem die genannte Einrichtung (43) zum schnellen Stoppen und schnellen Abführen ferner ein Hebemittel (59) umfaßt das betätigbar ist zwischen einer anfänglichen unteren Stellung und einer angehobenen Stellung, in der es den genannten Gegenstand (A) von der genannten Förderstrecke weg hochhebt.

10. Ein Fördersystem (1) nach Anspruch 9, in welchem das genannte Hebemittel (59) an der genannten zweiten Stelle angeordnet ist.

11. Ein Fördersystem (1) nach Anspruch 10, in welchem die genannte Einrichtung (43) zum schnellen Stoppen und schnellen Abführen ferner an einer der genannten ersten Stelle entsprechenden Position ein Bremsmittel (44) umfaßt, das an einer oder mehreren der genannten, an der genannten ersten Stelle angeordneten Rollen (11) zwecks Verringerung der Drehgeschwindigkeit der entsprechenden genannten Rollen (11) wirksam ist.

12. Ein Rollenfördersystem (1) nach Anspruch 1, in welchem jede der genannten Rollenanordnungen (6,11) ein erstes Drehteil (11) mit einer den genannten Gegenstand (A) zwecks Ausübung einer Vorschubkraft auf denselben berührenden ersten Umfangsfläche (11a) und einer zweiten Umfangsfläche (11b) sowie ein zweites Drehteil (8) mit einer zwecks Kopplung des genannten ersten und zweiten Drehteils (11,8) im Friktionseingriff mit der genannten zweiten Umfangsfläche (11b) des genannten ersten Drehteils (11) stehenden dritten Umfangsfläche (10) umfaßt, wobei die Größe der zwischen der genannten zweiten und dritten Umfangsfläche (11b,10) hergestellten Friktion so festgelegt ist, daß der Friktionseingriff normalerweise aufrechterhalten und der Friktionseingriff in Reaktion auf einen auf die genannte erste Umfangsfläche (11a) ausgeübten, einen bestimmten Wert übersteigenden Widerstand gegenüber der Drehung des genannten ersten Drehteils (11) gelöst wird, um Schlupf zwischen der genannten zweiten und dritten Umfangsfläche (11b,10) zum Stoppen der Drehung des genannten ersten Drehteils (11) zu ermöglichen, während das genannte zweite Drehteil (8) seine Drehung beibehält.

13. Ein Fördersystem (1) nach Anspruch 12, in welchem der genannte Antriebsmechanismus (30) einen Antriebsmotor (18) und eine Kraftübertragung (17) zum übertragen des Antriebsmomentes des genannten Antriebsmotors (18) umfaßt, wobei die genannte Kraftübertragung (17) einen um die genannten zweiten Drehteile (8) der genannten Rollenanordnungen (6,11) gewundenen Antriebsriemen (24) zum übertragen des Antriebsmomentes aufweist.

14. Ein Fördersystem (1) nach Anspruch 13, in welchem das genannte erste Drehteil (11) und das genannte zweite Drehteil (8) koaxial angeordnet und von einer gemeinsamen Achse (6) abgestützt sind, die sich von einem Paar jeweils entlang der genannten Förderbahn verlaufenden Stützrahmen (2) erstreckt.

15. Ein Fördersystem (1) nach Anspruch 12, das ferner eine Einrichtung (11c,10b) zum Begrenzen der Kontaktfläche zwischen der genannten zweiten und dritten Umfangsfläche (11b,10) umfaßt, welche Kontaktflächen-Begrenzungseinrichtung (11c,10b) die Kontaktfläche zwischen der genannten zweiten und dritten Umfangsfläche (11b,10) festlegt und dadurch die Größe der Friktion zwischen der genannten zweiten und dritten Umfangsfläche (11b,10) bestimmt.

16. Ein Fördersystem (1) nach Anspruch 12, das ferner an einer vorbestimmten Position in der genannten Förderbahn eine Einrichtung (43) zum schnellen Stoppen und schnellen Abführen des genannten Gegenstandes (A) umfaßt, wobei die genannte Einrichtung (43) einen Hilfsantriebsmechanismus (33) enthält, der den genannten ersten Drehteilen (11) der genannten Rollenanordnungen (6,11) zugeordnet ist, die an Positionen angebracht sind, die der Position der genannten Einrichtung (43) entsprechen, und der eine veränderliche Antriebsgeschwindigkeit zum Verändern der Drehgeschwindigkeit der zugeordneten ersten Drehteile (11) aufweist.

17. Ein Fördersystem (1) nach Anspruch 16, in welchem der genannte Hilfsantriebsmechanismus (33) die Drehgeschwindigkeit der genannten zugeordneten ersten Drehteile (11) verzögert, wenn der genannte Gegenstand (A) eine erste vorbestimmte Stelle in der genannten Förderstrecke erreicht, und die Drehung für einen bestimmten Zeitraum stoppt, wenn der genannte Gegenstand (A) eine zweite vorbestimmte Stelle zum Stoppen des genannten Gegenstandes (A) an der genannten zweiten Stelle erreicht.

18. Ein Fördersystem (1) nach Anspruch 16, in welchen der genannte Hilfsantriebsmechanismus (33) die Drehgeschwindigkeit der genannten zugeordneten ersten Drehteile (11) beschleunigt, wenn der genannte Gegenstand (A) eine erste vorbestimmte Stelle in der genannten Förderstrecke erreicht, die Drehgeschwindigkeit der genannten zugeordneten ersten Drehteile (11) verzögert, wenn der genannte Gegenstand (A) eine zweite vorbestimmte Stelle bahnabwärts der genannten ersten vorbestimmten Stelle erreicht, und die Drehung für einen bestimmten Zeitraum stoppt, wenn der genannte Gegenstand (A) eine dritte vorbestimmte Stelle zum Stoppen des genannten Gegenstandes (A) an der genannten dritten Stelle erreicht.

19. Ein Fördersystem (1) nach Anspruch 17 oder Anspruch 18, in welchem der genannte Hilfsantriebsmechanismus (33) nach dem genannten bestimmten Zeitraum die Drehung zwecks Antrieb der genannten zugeordneten ersten Drehteile (11) mit einer bestimmten Geschwindigkeit wiederaufnimmt.

20. Ein Fördersystem (1) nach Anspruch 16 oder Anspruch 17, in welchem die genannte Einrichtung (43) zum schnellen Stoppen und schnellen Abführen ferner ein Hebemittel (59) umfaßt, das betätigbar ist zwischen einer anfänglichen unteren Stellung und einer angehobenen Stellung, in der es den genannten Gegenstand (A) von der genannten Förderbahn weg hochhebt.

21. Ein Fördersystem (1) nach Anspruch 20, in welchem das genannte Hebemittel (59) an der genannten zweiten Stelle angeordnet ist.

22. Ein Fördersystem (1) nach Anspruch 20, in welchem die Einrichtung (43) zum schnellen Stoppen und schnellen Abführen ferner an einer der genannten ersten Stelle entsprechenden Position ein Bremsmittel (44) umfaßt, das an einem oder mehreren der genannten, an der genannten ersten Stelle angeordneten ersten Drehteile (11) zwecks Verringerung der Drehgeschwindigkeit der entsprechenden genannten ersten Drehteile (11) wirksam ist.

FIG.1

FIG.2

**FIG.3**

FIG.4

FIG.5

EP 0 264 254 B1

**FIG.6**

**FIG. 7**

**FIG.8**

FIG.9

FIG. 10

EP 0 264 254 B1

FIG. 11

FIG. 12